# EUROPÄISCHE PATENTANMELDUNG

(11) **EP 4 597 278 A1**
(43) Veröffentlichungstag der Anmeldung: **06.08.2025**
(21) Anmeldenummer: 24217411.8
(22) Anmeldetag: 04.12.2024
(51) Int. Cl.: G06F 3/042, B60K 35/10, G06F 3/044, G06F 3/04883

(54) **EINGABEVORRICHTUNG ZUR STEUERUNG EINER LANDWIRTSCHAFTLICHEN ARBEITSMASCHINE SOWIE VERFAHREN UND LANDWIRTSCHAFTLICHE ARBEITSMASCHINE**

(30) Priorität: 31.01.2024 DE 102024102712
(71) Anmelder: CLAAS Tractor S.A.S., 78141 Vélizy-Villacoublay Cedex (FR)
(72) Erfinder: Keßler, Christopher-Peter, 59510 Lippetal (DE); Armbrust, Christopher, 49080 Osnabrück (DE); Cord-Landwehr, Andreas, 49196 Bad Laer (DE); Schäfer, Daniel, 49080 Osnabrück (DE); Großmann, Alexander, 49086 Osnabrück (DE); Knoop, Markus, 33142 Büren (DE)
(74) Vertreter: CLAAS Gruppe

(57) **Zusammenfassung**

Die Erfindung betriff eine Eingabevorrichtung (3) zur Steuerung einer landwirtschaftlichen Arbeitsmaschine (1), umfassend mindestens einen berührungsempfindlichen Bildschirm (7), wobei mittels einer Berührung des Bildschirms (7) eine Eingabe mit einem Befehl zur Steuerung der landwirtschaftlichen Arbeitsmaschine (1) eingegeben, entfernt und/oder modifiziert werden kann, und umfassend mindestens einen Sensor (10, 12) zur Erfassung eines sich dem Bildschirm (7) nähernden Objekts (13). Ferner umfasst die Eingabevorrichtung (3) mindestens eine Recheneinheit zur Verarbeitung der von dem Sensor (10, 12) erfassten Daten. Um eine Eingabevorrichtung zur Steuerung einer landwirtschaftlichen Arbeitsmaschine bereitzustellen, bei der das Erreichen einer gesicherten Eingabe durch einen Benutzer alternativ erfolgt, ist gemäß der Erfindung vorgesehen, dass die Eingabevorrichtung (3) dazu geeignet und eingerichtet ist, die Vornahme der Berührung des Bildschirms (7) anhand des Sensors (10, 12) zu verifizieren. Ferner betrifft die Erfindung ein entsprechendes Verfahren sowie eine entsprechende Arbeitsmaschine (1).

## Beschreibung

Die vorliegende Anmeldung betrifft eine Eingabevorrichtung zur Steuerung einer landwirtschaftlichen Arbeitsmaschine gemäß dem Oberbegriff von Anspruch 1. Des Weiteren betrifft die Anmeldung ein Verfahren zur Überprüfung einer Vornahme einer Berührung eines Bildschirms einer Eingabevorrichtung zur Steuerung einer landwirtschaftlichen Arbeitsmaschine gemäß dem Oberbegriff von Anspruch 7. Ferner betrifft die Anmeldung eine entsprechende landwirtschaftliche Arbeitsmaschine gemäß Anspruch 9.

Die Eingabevorrichtung umfasst einen berührungsempfindlichen Bildschirm, wobei mittels einer Berührung des Bildschirms eine Eingabe mit einem Befehl zur Steuerung der landwirtschaftlichen Arbeitsmaschine eingegeben, entfernt und/oder modifiziert werden kann. Ferner umfasst die Eingabevorrichtung mindestens einen Sensor zur Erfassung eines sich dem Bildschirm nähernden Objekts sowie mindestens eine Recheneinheit zur Verarbeitung der von dem Sensor erfassten Daten.

Eingabevorrichtungen sind bereits aus dem Stand der Technik zahlreich bekannt. Dabei ist es ferner bekannt, dass die Eingabevorrichtungen in einen Bereitschaftsbetrieb, den sogenannten Stand-by-Modus, versetzt werden können. In dem Bereitschaftsbetrieb ist die Vorrichtung im Hinblick auf ihre eigentliche Nutzungsfunktion deaktiviert, kann aber ohne längere Wartezeiten wieder aktiviert werden. Der Bereitschaftsbetrieb dient in erster Linie dem Energiesparen und vermeidet hohe Nutzungszeiten, die aufgrund einem Nichtvorhandensein eines Nutzers sinnlos wären.

Aus der DE 10 2016 100 363 A1 ist es beispielsweise bekannt, Prozessoren und andere Komponenten einer elektronischen Vorrichtung in einem Energiesparmodus oder in einem Schlafmodus zu betreiben, wenn sich in der Nähe der elektronischen Vorrichtung kein Benutzer aufhält. Die Bestimmung der Gegenwart eines Benutzers wird dabei über Näherungssensoren durchgeführt. Wenn sich ein Benutzer in den Empfangsbereich des Näherungssensors bewegt, werden Infrarot-Emissionen von dem durch die mindestens eine Näherungssensorkomponente detektiert. Die Prozessoren können dann eine oder mehrere Benutzerschnittstellenvorrichtungen betätigen, wenn der Infrarot-Signalempfänger die Infrarot-Emissionen von dem Benutzer empfängt, um die Vorrichtung zu "wecken". Dementsprechend ist die Vorrichtung benutzungsbereit, sobald der Benutzer die Vorrichtung erreicht, ohne dass der Benutzer zusätzliche Handgriffe ausführen muss, um die Vorrichtung aus dem Energiesparmodus zu wecken.

Aus der DE 10 2017 105 487 A1 ist weiterhin ein landwirtschaftliches Terminal zur Steuerung einer landtechnischen Maschine bekannt. Das Terminal verfügt über einen berührungsempfindlichen Bildschirm. Um eine bessere Ausnutzung des Bildschirmbereichs des Terminals zu ermöglichen, ist vorgesehen, dass das Terminal über zumindest einen Näherungssensor zur Erfassung von sich nähernden Objekten verfügt. Das Terminal blendet oder stellt bei sich nähernden Objekten, insbesondere einer Hand oder Fingern, Bedienelemente zur Einstellung von Einstellparametern, insbesondere einer Anpassung der Ausbringmenge oder einem Schalten von Teilbreiten, der landtechnischen Maschine ein oder vergrößert dar.

Bei Eingabevorrichtung kann es vorkommen, dass Eingaben ausgelöst werden, obwohl diese tatsächlich nicht von einer Person eingegeben wurden. Dieses Phänomen ist auch bei Smartphones bekannt, auf deren Bildschirmen Aktionen ausgeführt werden, ohne dass der Bildschirm berührt wurde. Dieser Effekt wird "Ghost Touch" genannt, da die Eingabevorrichtung so reagiert, als ob ein Geist dieselbe betätigen würde. Durch solche Eingaben besteht das Risiko einer Fehlbedienung der landtechnischen Maschine, was aus Sicherheitsgründen unbedingt zu vermeiden ist.

Der vorliegenden Anmeldung liegt die Aufgabe zugrunde, eine Eingabevorrichtung zur Steuerung einer landwirtschaftlichen Arbeitsmaschine bereitzustellen, bei der das Erreichen einer gesicherten Eingabe durch einen Benutzer alternativ erfolgt.

Die zugrunde liegende Aufgabe wird erfindungsgemäß mittels der Eingabevorrichtung mit den Merkmalen des Anspruchs 1 gelöst. Vorteilhafte Ausgestaltungen ergeben sich aus den zugehörigen Unteransprüchen sowie der Beschreibung.

Die erfindungsgemäße Eingabevorrichtung ist erfindungsgemäß dazu geeignet und eingerichtet, die Vornahme der Berührung des Bildschirms anhand des Sensors zu verifizieren. Dies bedeutet, dass unter Verwendung der Sensordaten eine gültige Eingabe des Benutzers erkannt wird. Demnach verarbeitet die Eingabevorrichtung mittels der Recheneinheit die Information des Sensors dahingehend, ob der Bildschirm tatsächlich von einem Benutzer berührt wurde, oder ob es sich gegebenenfalls um einen Ghost Touch handelt, bei dem der Bildschirm nicht von einem Benutzer berührt wurde. Auf diese Weise wird ein sicherer Betrieb der Eingabevorrichtung gewährleistet. Dabei kann vorgesehen sein, dass für den Fall, dass der Sensor kein oder ein falsches Ergebnis liefert, eine Ausweichlösung in Form eines Bestätigungsdialogs (doppelte Eingabe) implementiert wird, um eine sichere Eingabe in allen möglichen sicherheitskritischen Situationen zu gewährleisten.

Die erfindungsgemäße Eingabevorrichtung hat viele Vorteile:

Zunächst werden mit der Erfindung Ghost Touches verhindert, da eine Eingabe auf dem Bildschirm nur Aktionen der Eingabevorrichtung hervorrufen kann, wenn zeitgleich die Vornahme einer Berührung des Bildschirms von dem Sensor erfasst wurde.

Bei landwirtschaftlichen Arbeitsmaschinen gibt es verschiedene Maschinenfunktionen, die bestimmte Sicherheitsstufen erfordern, wobei zum Erreichen einer Sicherheitsstufe typischerweise ein Mechanismus zur Validierung einer sicheren Eingabe durch den Benutzer erfolgen muss. Mittels der vorliegenden Erfindung, die eine tatsächliche Berührung des Bildschirms bestätigt, können Benutzerinteraktionen reduziert werden, um sichere Bildschirmeingaben von sicherheitsrelevanten Maschinenfunktionen zu gewährleisten.

Die gezielte Berührung des Bildschirms durch einen Nutzer kann mit Hilfe eines dafür vorgesehenen Stiftes erfolgen, oder aber auch mittels eines Fingers. Vorteilhafterweise können in Abhängigkeit von einer vordefinierten Berührung entsprechend empfangene Daten des Sensors von der Recheneinheit verarbeitet werden, so dass die Eingabevorrichtung letztlich auch unterscheiden kann, ob ein "zugelassenes" Objekt den Bildschirm berührt oder nicht. Auf diese Weise kann ebenfalls verhindert werden, dass aufgrund einer Bewegung des Nutzers beispielsweise ein Kleidungsstück, wie eine Jacke, eine Validierung einer Eingabe bewirken würde.

Aus dem Stand der Technik ist die Nutzung von Sensoren zum Erfassen einer Person in der Nähe der Eingabevorrichtung bekannt, wobei die Eingabevorrichtung bei Erkennen einer Person von dem Standby-Modus in den aktiven Modus schaltet. Die vorliegende Erfindung nutzt ebenfalls Sensoren, jedoch gänzlich zu einem anderen Zweck und neuartig. Demnach wird der Sensor dazu verwendet, eine Annäherung an den Bildschirm zu erfassen, um damit eine Berührung des Bildschirms zu bestätigen. Gemäß der Erfindung wird die Annäherung an den Bildschirm erfasst, wobei diese Information in der Eingabevorrichtung weiterverarbeitet wird und Grundlage für nachfolgende Schritte ist.

Eine vorteilhafte Ausgestaltung der Erfindung sieht vor, dass es sich bei der Eingabevorrichtung um ein Terminal handelt.

Gemäß einer weiteren vorzugsweisen Ausgestaltung der Erfindung ist vorgesehen, dass der Sensor einen Erfassungsradius im Bereich zwischen 1 mm und 150 mm aufweist. Als Erfassungsradius wird gemäß der vorliegenden Anmeldung der Radius um den Sensor definiert, innerhalb dem der Sensor das Objekt erfasst. In einem Bereich außerhalb des Erfassungsradius werden somit keine Daten durch den Sensor erfasst. Ein maximaler Abstand von 150 mm von einer Bildschirmoberfläche wird als ausreichend dafür aufgefasst, eine sich dem Bildschirm näherndes Objekt zu detektieren.

Ferner ist es gemäß einer Ausgestaltung der Erfindung besonders vorteilhaft, wenn der Sensor dazu geeignet ist, eine sich dem Bildschirm nähernde Hand oder mindestens einen Finger zu erfassen. Bei Eingabevorrichtungen, die typischerweise direkt mit der Hand beziehungsweise mit dem Finger betätigt werden, also bei sogenannten Touch-Pads ist es besonders von Vorteil, wenn das von dem Sensor erfasste Objekt als solches erkannt wird. Hierdurch erhöht sich wiederum die Sicherheit, eine gewollte Berührung des Bildschirms zu erkennen.

In Bezug auf die Ausbildung des Sensors ist es besonders vorteilhaft, wenn dieser als kapazitiver Sensor, als optischer Sensor, insbesondere Infrarot-Sensor, als Ultraschallsensor, als Time-of-Flight-Kamera oder als Laserscanner ausgebildet ist. Die Auswahl des Sensors hängt von verschiedenen Faktoren ab und kann je nach Anforderung ausgewählt werden.

In einer besonders bevorzugten Ausgestaltung der Erfindung ist vorgesehen, dass die Eingabevorrichtung zwei Sensoren aufweist, wobei ein erster Sensor an einem oberen Rand des Bildschirms und ein zweiter Sensor an einem unteren Rand des Bildschirms angeordnet ist. Auf diese Weise lässt sich erreichen, dass ein größtmöglicher Bereich vor dem Bildschirm von den Sensoren erfasst wird, wobei unerheblich ist, ob sich das Objekt einem oberen Bereich des Bildschirms nähert oder einem unteren Bereich. Bezüglich der Sensoren kann ferner bevorzugt vorgesehen sein, dass die Sensoren eine Länge aufweisen, die jeweils einer korrespondierenden Breite des Bildschirms entspricht. Anders ausgedrückt ist es vorteilhaft, wenn sich die Sensoren jeweils über die Länge des entsprechenden oberen und/oder unteren Randes des Bildschirms erstrecken.

Alternativ wäre auch denkbar, dass ein erster Sensor an einem ersten seitlichen Rand und ein zweiter Sensor an einem zweiten seitlichen Rand des Bildschirms angeordnet werden, wobei auch diese Sensoren vorteilhafterweise eine Länge aufweisen können, die einer Länge des jeweiligen Randes entsprechen. Ferner wäre es auch denkbar, dass an allen vier Rändern des Bildschirms entsprechende Sensoren angeordnet sind, wobei auch verschiedene Arten von Sensoren an den verschiedenen Rändern eingesetzt werden können.

Verfahrensmäßig wird die eingangs genannte Aufgabe durch ein Verfahren gemäß Anspruch 7 gelöst. Das Verfahren zur Überprüfung einer Vornahme einer Berührung eines Bildschirms einer Eingabevorrichtung zur Steuerung einer landwirtschaftlichen Arbeitsmaschine nach einem der vorgehergehenden Ansprüche ist durch die folgenden Verfahrensschritte gekennzeichnet:

In einem ersten Schritt wird eine Berührung des Bildschirms der Eingabevorrichtung detektiert.

In einem zweiten Schritt erfolgt die Überprüfung eines Vorhandenseins eines Signals des Sensors infolge der Berührung mittels einer Recheneinheit.

In einem dritten Schritt wird zwischen zwei Zuständen unterschieden, nämlich zwischen einem Vorhandensein des Signals des Sensors und einem Fehlen des Signals des Sensors. Ist das Signal des Sensors vorhanden wird der mit der Eingabe eingegeben Befehls ausgeführt. Bei Fehlen des Signals des Sensors erfolgt ein Anzeigen einer Meldung auf dem Bildschirm.

Die Vorteile des erfindungsgemäßen Verfahrens entsprechen den zuvor die Eingabevorrichtung entsprechenden Vorteilen.

Eine vorteilhafte Weiterbildung des erfindungsgemäßen Verfahrens sieht vor, dass bei Fehlen des Signals eine erneute Berührung des Bildschirms zur erneuten Vornahme der Eingabe und/oder zur Bestätigung der Eingabe gefordert wird, damit der Befehl ausgeführt wird.

Schließlich wird die eingangs genannte Aufgabe durch eine landwirtschaftliche Arbeitsmaschine gelöst, die eine Eingabevorrichtung nach einem der Ansprüche 1 bis 6 umfasst.

Diesbezüglich ist es besonders von Vorteil, wenn die Eingabevorrichtung in einer Kabine der landwirtschaftlichen Arbeitsmaschine angeordnet ist. Demnach kann die Eingabevorrichtung von dem Fahrzeugführer bedient werden, ohne die Kabine verlassen zu müssen.

Die Erfindung ist nachstehend anhand eines Ausführungsbeispiels, das in den Figuren dargestellt ist, näher erläutert. Es zeigt:
- Fig. 1:: Eine erfindungsgemäße landwirtschaftliche Arbeitsmaschine.
- Fig. 2:: Eine Frontansicht einer erfindungsgemäßen Eingabevorrichtung.
- Fig. 3:: Einen vertikalen Schnitt durch die Eingabevorrichtung aus Figur 2.

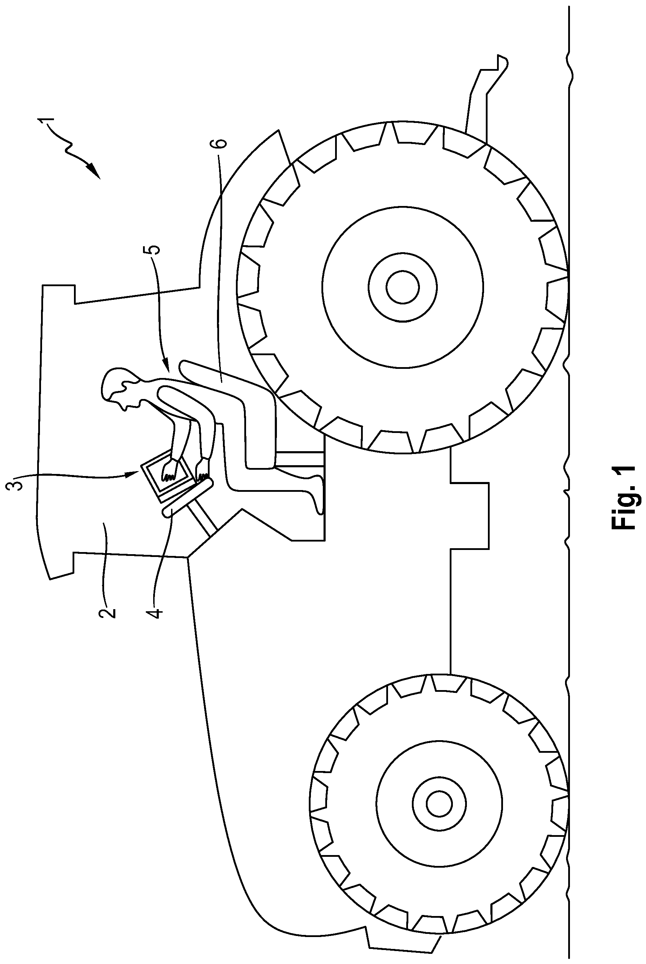

Eine erfindungsgemäße landwirtschaftliche Arbeitsmaschine **1** ist in der **Figur 1** gezeigt. Die landwirtschaftliche Arbeitsmaschine **1** ist als Traktor ausgebildet. Im Bereich einer Fahrerkabine **2** ist eine erfindungsgemäße Eingabevorrichtung **3** angeordnet, die neben einem Lenkrad **4** positioniert ist, so dass ein Fahrzeugführer **5** diese erreichen kann, ohne seinen Sitzplatz **6** zu verlassen. Die Eingabevorrichtung **3** ist als Terminal ausgebildet und dient zur Erfassung von Befehlen, die wiederum zur Steuerung des Traktors vorgesehen sind.

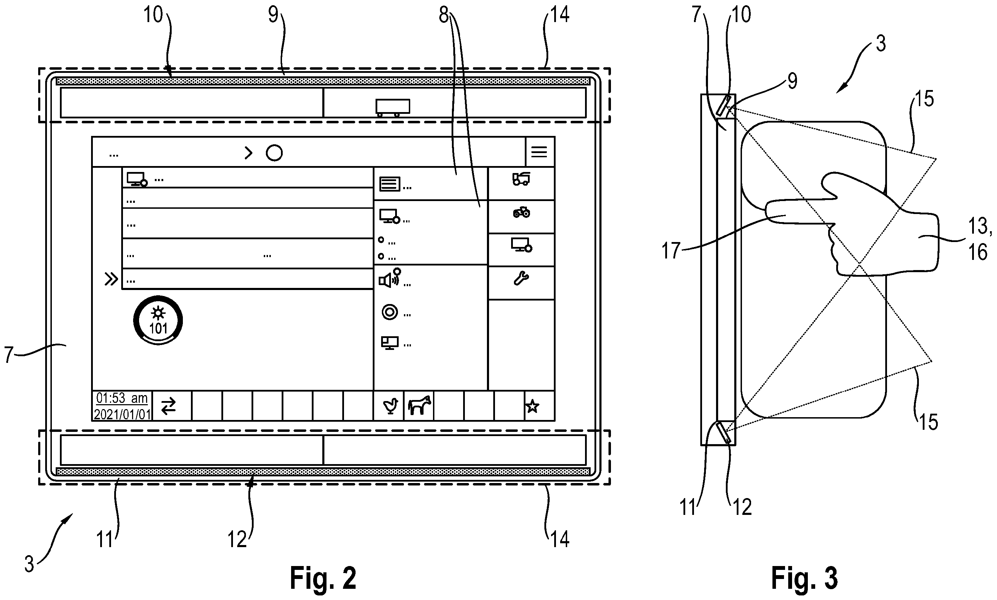

In der **Figur 2** ist die erfindungsgemäße Eingabevorrichtung **3** in einer Frontansicht gezeigt, so dass ein Bildschirm **7** der Eingabevorrichtung **3** zu erkennen ist. Der Bildschirm **7** ist als berührungsempfindlicher Bildschirm **7** ausgebildet, was bedeutet, dass über eine Berührung des Bildschirms **7** eine Eingabe mit einem Befehl zur Steuerung der landwirtschaftlichen Arbeitsmaschine **1** eingegeben, entfernt und/oder modifiziert werden kann. Auf dem Bildschirm **7** sind verschiedene Auswahloptionen **8** zwecks Bedienung gezeigt, wobei diese für die Erfindung nicht relevant sind.

Entlang eines oberen Randes **9** des Bildschirms **7** ist ein erster Sensor **10** und entlang eines unteren Randes **11** des Bildschirms **7** ist ein zweiter Sensor **12** angeordnet, der zur Erfassung eines sich dem Bildschirm nähernden Objekts **13** dient. Im vorliegenden Fall sind die Sensoren **10, 12** als Infrarotsensor ausgebildet, wobei auch andere Arten von Sensoren eingesetzt werden können. Die Sensoren **10, 12** sind in der **Figur 2** jeweils als gestrichelte Linie **14** schematisch dargestellt. Alternativ ist es gemäß der Erfindung auch möglich, die Sensoren an seitlichen Rändern des Bildschirms anzuordnen.

Die Eingabevorrichtung **3** besitzt eine Recheneinheit, die in den Figuren nicht explizit dargestellt ist. Die Recheneinheit dient zur Verarbeitung der von den Sensoren **10, 12** empfangenen Daten, so dass die Vornahme der Berührung des Bildschirms **7** verifiziert werden kann und gegebenenfalls weitere Schritte eingeleitet werden können.

In der **Figur 3** ist die erfindungsgemäße Eingabevorrichtung **3** in einer Seitenansicht dargestellt, wobei ein Erfassungsradius **15** der jeweiligen beiden Sensoren **10, 12** maximal 150 mm beträgt. Eine Hand **16** des Fahrzeugführers **5** mit ausgestrecktem Finger **17** ist in einer Position nah des Bildschirms **7** positioniert und wird von beiden Sensoren **10, 12** erfasst.

Mittels der erfindungsgemäßen Eingabevorrichtung **3** ist das erfindungsgemäße Verfahren zur Überprüfung einer Vornahme einer Berührung des Bildschirms **7** der Arbeitsmaschine **1** besonders einfach durchführbar. Die einzelnen Schritte des Verfahrens laufen wie folgt ab:

Zunächst wird in einem ersten Schritt eine Berührung des Bildschirms **7** der Eingabevorrichtung **3** detektiert, indem die Hand **16** innerhalb des Erfassungsradius **15** erkannt wird.

In einem zweiten Schritt erfolgt die Überprüfung eines Vorhandenseins eines Signals des Sensors **10, 12** infolge der Berührung mittels einer Recheneinheit. Es sei darauf hingewiesen, dass es als ausreichend definiert sein kann, wenn lediglich einer der beiden Sensoren **10, 12** ein Signal erfasst.

In einem dritten Schritt wird zwischen zwei Zuständen unterschieden, nämlich zwischen einem Vorhandensein des Signals des Sensors **10, 12** und einem Fehlen des Signals des Sensors **10, 12.** Ist das Signal des Sensors **10, 12** vorhanden, wird der mit der Eingabe eingegebene Befehl ausgeführt. Bei Fehlen des Signals des Sensors **10, 12** erfolgt ein Anzeigen einer Meldung auf dem Bildschirm **7.**

Die Vorteile des erfindungsgemäßen Verfahrens entsprechen den zuvor die Eingabevorrichtung **3** entsprechenden Vorteilen.

Eine vorteilhafte Weiterbildung des erfindungsgemäßen Verfahrens sieht vor, dass bei Fehlen des Signals eine erneute Berührung des Bildschirms **7** zur erneuten Vornahme der Eingabe und/oder zur Bestätigung der Eingabe gefordert wird, damit der Befehl ausgeführt wird.

### Bezugszeichenliste

- 1: Landwirtschaftliche Arbeitsmaschine
- 2: Fahrerkabine
- 3: Eingabevorrichtung
- 4: Lenkrad
- 5: Fahrzeugführer
- 6: Sitzplatz
- 7: Bildschirm
- 8: Auswahloption
- 9: Oberer Rand
- 10: Erster Sensor
- 11: Unterer Rand
- 12: Zweiter Sensor
- 13: Objekt
- 14: Gestrichelte Linie
- 15: Erfassungsradius
- 16: Hand
- 17: Finger

## Patentansprüche

1. Eingabevorrichtung (3) zur Steuerung einer landwirtschaftlichen Arbeitsmaschine (1), umfassend
- mindestens einen berührungsempfindlichen Bildschirm (7), wobei mittels einer Berührung des Bildschirms (7) eine Eingabe mit einem Befehl zur Steuerung der landwirtschaftlichen Arbeitsmaschine (1) eingegeben, entfernt und/oder modifiziert werden kann, und
- mindestens einen Sensor (10, 12) zur Erfassung eines sich dem Bildschirm (7) nähernden Objekts (13),
- mindestens eine Recheneinheit zur Verarbeitung der von dem Sensor (10, 12) erfassten Daten,
**dadurch gekennzeichnet, dass**
die Eingabevorrichtung (3) dazu geeignet und eingerichtet ist, die Vornahme der Berührung des Bildschirms (7) anhand des Sensors (10, 12) zu verifizieren.

2. Eingabevorrichtung (3) nach Anspruch 1, **dadurch gekennzeichnet, dass** es sich bei der Eingabevorrichtung (3) um ein Terminal handelt.

3. Eingabevorrichtung (3) nach Anspruch 1 oder 2, **dadurch gekennzeichnet, dass** der Sensor (10, 12) einen Erfassungsradius (15) im Bereich zwischen 1 mm und 150 mm aufweist.

4. Eingabevorrichtung (3) nach einem der vorhergehenden Ansprüche, **dadurch gekennzeichnet, dass** der Sensor (10,12) dazu geeignet ist, eine sich dem Bildschirm (7) nähernde Hand (16) oder mindestens einen Finger (17) zu erfassen.

5. Eingabevorrichtung (3) nach einem der vorhergehenden Ansprüche, **dadurch gekennzeichnet, dass** der Sensor (10, 12) als kapazitiver Sensor, als optischer Sensor, insbesondere Infrarot-Sensor (10, 12), als Ultraschallsensor, als Time-of-Flight-Kamera oder als Laserscanner ausgebildet ist.

6. Eingabevorrichtung (3) nach einem der vorhergehenden Ansprüche, **dadurch gekennzeichnet, dass** die Eingabevorrichtung (3) zwei Sensoren (10, 12) aufweist, wobei ein erster Sensor (10) an einem oberen Rand (9) des Bildschirms (7) und ein zweiter Sensor (12) an einem unteren Rand (11) des Bildschirms (7) angeordnet ist.

7. Verfahren zur Überprüfung einer Vornahme einer Berührung eines Bildschirms (7) einer Eingabevorrichtung (3) zur Steuerung einer landwirtschaftlichen Arbeitsmaschine (1) nach einem der vorgehergehenden Ansprüche, **gekennzeichnet durch** die folgenden Verfahrensschritte:
- Detektieren einer Berührung des Bildschirms (7) der Eingabevorrichtung (3).
- Überprüfung eines Vorhandenseins eines Signals des Sensors (10, 12) infolge der Berührung.
- Bei Vorhandensein des Signals des Sensors (10, 12) Ausführung des mit der Eingabe eingegeben Befehls.
- Bei Fehlen des Signals des Sensors (10, 12) Anzeigen einer Meldung auf dem Bildschirm (7).

8. Verfahren nach Anspruch 7, **dadurch gekennzeichnet, dass** bei Fehlen des Signals eine erneute Berührung des Bildschirms (7) zur erneuten Vornahme der Eingabe und/oder zur Bestätigung der Eingabe gefordert wird, damit der Befehl ausgeführt wird.

9. Landwirtschaftliche Arbeitsmaschine (1), umfassend eine Eingabevorrichtung (3) nach einem der Ansprüche 1 bis 6.

10. Landwirtschaftliche Arbeitsmaschine (1) nach Anspruch 9, **dadurch gekennzeichnet, dass** die Eingabevorrichtung (3) in einer Kabine (2) der landwirtschaftlichen Arbeitsmaschine (1) angeordnet ist.
